# FASCICULE DE BREVET EUROPEEN

(11) **EP 1 116 909 B1**
(45) Date de publication et mention de la délivrance du brevet: **08.09.2004**
(21) Numéro de dépôt: 01400078.0
(22) Date de dépôt: 12.01.2001
(51) Int. Cl.: F16K 31/34, F16K 31/385

(54) **Robinet à flotteur.**
Schwimmer betätigtes Ventil
Float controlled valve

(30) Priorité: 14.01.2000 FR 0000478
(43) Date de publication de la demande: 18.07.2001
(73) Titulaire: Aliaxis R&D S.A.S., 78540 Vernouillet (FR)
(72) Inventeur: Oury, Jean-Claude, 38440 Artas (FR)
(74) Mandataire: Laget, Jean-Loup

(56) Documents cités:
- EP-A- 0 470 642
- WO-A-95/05508
- FR-A- 2 732 439
- US-A- 5 836 346
- PATENT ABSTRACTS OF JAPAN vol. 005, no. 048 (P-055), 7 avril 1981 (1981-04-07) & JP 56 002011 A (KEIHIN SEIKI MFG CO LTD), 10 janvier 1981 (1981-01-10)

## Description

La présente invention concerne un robinet à flotteur pour réservoir de chasse d'eau, du type comportant un corps dans lequel est logé un conduit d'alimentation prolongé à une extrémité par un embout de fixation se raccordant à l'alimentation en eau et dont l'extrémité opposée porte un siège en contact avec une membrane souple élastiquement déformable, en aval de laquelle est définie une chambre de contre-pression pourvue d'un orifice d'échappement obturé par un clapet de fermeture actionné par des moyens de commande associés à un flotteur plongeant dans le réservoir et monté à une longueur réglable sur une vis de réglage.

Un tel robinet à flotteur permet de remplir le réservoir jusqu'à un niveau de consigne détecté par le flotteur dudit réservoir. La fermeture du réservoir est assistée par la pression régnant dans ledit robinet en utilisant le principe de la contre-pression.

Des robinets universels connus comportent une valve permettant leur fermeture sous l'effet de la montée du niveau d'eau dans le réservoir. Ainsi, dans US-A-3 669 138,ou US-A-4 338 964, une valve est commandée par un bras de commande pivotant relié à un flotteur se déplaçant verticalement sous l'effet du niveau de l'eau.

Dans le document WO-A-99 34139 constituant l'état de la technique le plus proche, on décrit un robinet fonctionnant à contre-pression dans lequel l'ensemble filtre, siège de la valve, la valve ainsi qu'un composant définissant la chambre de contre-pression, sont reliés les uns aux autres de manière détachable et sont préassemblés pour être montés et démontés du corps du robinet.

Dans les robinets à contre-pression, existe un problème lié à la fermeture du clapet d'échappement. En effet, lorsque le flotteur remonte avec le niveau d'eau, il agit sur l'organe de fermeture de manière progressive. Aussi, il existe une fuite avant fermeture complète du robinet, cette fuite engendrant du bruit.

Pour pallier cet inconvénient, EP-A-0 118 647, propose un robinet hydromécanique pour réservoir de chasse du type comportant un circuit d'écoulement primaire à ouverture et fermeture hydrauliques au moyen d'un obturateur constitué par une membrane souple dont la position est fonction de la valeur de la pression présente dans le circuit d'écoulement secondaire équipé d'un clapet pilote actionné par l'intermédiaire d'un flotteur logé dans le réservoir. Le conduit d'admission, la chambre concentrique dans laquelle débouche ce dernier, la membrane souple et son siège, le siège du clapet pilote et ledit clapet sont alignés sur un même axe. Le flotteur est relié à un levier pivotant qui entraîne en translation le clapet. Ainsi, lors du remplissage du réservoir, il subit une remontée verticale qui entraîne en pivotement le levier, lequel entraîne en translation le clapet vers son siège. Cet entraînement se fait progressivement. Ce flotteur comporte une cuvette qui recueille l'eau depuis le circuit secondaire et leste le flotteur pour freiner sa remontée par la suite, puis le délestage du flotteur assure ensuite une force plus élevée d'application du clapet.

Un tel robinet présente l'inconvénient de proposer une structure relativement complexe pour obtenir un effet de fermeture instantanée.

La présente invention a donc pour but de proposer un robinet à flotteur dont la fermeture est instantanée et qui présente une structure simple et d'encombrement réduit.

A cet effet, l'invention a pour objet un robinet à flotteur pour réservoir de chasse d'eau, du type comportant un corps dans lequel est logé un conduit d'alimentation prolongé à une extrémité par un embout de fixation se raccordant à l'alimentation en eau et dont l'extrémité opposée porte un siège en contact avec une membrane souple élastiquement déformable obturant la communication entre le conduit d'alimentation et un tube plongeur débouchant dans le réservoir, et en amont de laquelle est définie une chambre de pression tandis qu'en aval est définie une chambre de contre-pression pourvue d'un orifice d'échappement obturé par un clapet de fermeture actionné par un flotteur plongeant dans le réservoir, les deux chambres communiquant au travers d'une perforation centrale de la membrane avec un jeu calibré, caractérisé en ce que le flotteur est associé à des moyens de commande du clapet comportant au moins un premier levier monté pivotant, à une extrémité, sur le corps du robinet ou sur un bouchon de fermeture dudit corps et portant à son autre extrémité ladite vis de réglage, au moins un second levier agissant sur le clapet de fermeture étant monté pivotant à une extrémité sur le corps du robinet ou le bouchon de fermeture, un moyen de rappel élastique maintenant ledit clapet de fermeture écarté de l'orifice d'échappement, le second levier, à son extrémité opposée, étant muni d'un profil de came avec lequel coopère, au cours de la montée du flotteur, un organe en saillie tel qu'un téton ménagé sur le premier levier, de manière à surmonter la force de rappel du moyen de rappel élastique.

Ainsi, le profil de came du second levier permet une course utile du second levier qui aboutit à une fermeture instantanée de l'orifice d'échappement dès que la force de rappel du moyen de rappel élastique a été surmontée.

De préférence, la chambre de contre-pression est définie entre la membrane et un bouchon de fermeture du corps du robinet monté à l'une des extrémités ouvertes dudit corps. Le second levier portant le clapet de fermeture se présente sous la forme d'un capot de fermeture monté pivotant sur ledit bouchon à une extrémité et pourvu, à son extrémité opposée, de deux bras en saillie dudit capot coopérant avec le premier levier.

Le premier levier peut se présenter sous forme d'une pièce montée pivotante à une extrémité sur le corps de robinet ou le bouchon de fermeture dudit corps et comportant, à son extrémité opposée, deux bras entre lesquels la vis de réglage est en prise. Selon une variante de réalisation, il peut exister deux premiers leviers distincts parallèles.

On obtient avantageusement, un robinet à flotteur de forme compacte et peu encombrant et qui assure une fermeture instantanée du robinet évitant ainsi les bruits occasionnés lors de la fermeture progressive du clapet dans les systèmes classiques, en particulier par basculement.

La présente invention sera maintenant décrite plus en détail en référence au dessin en annexe dans lequel :

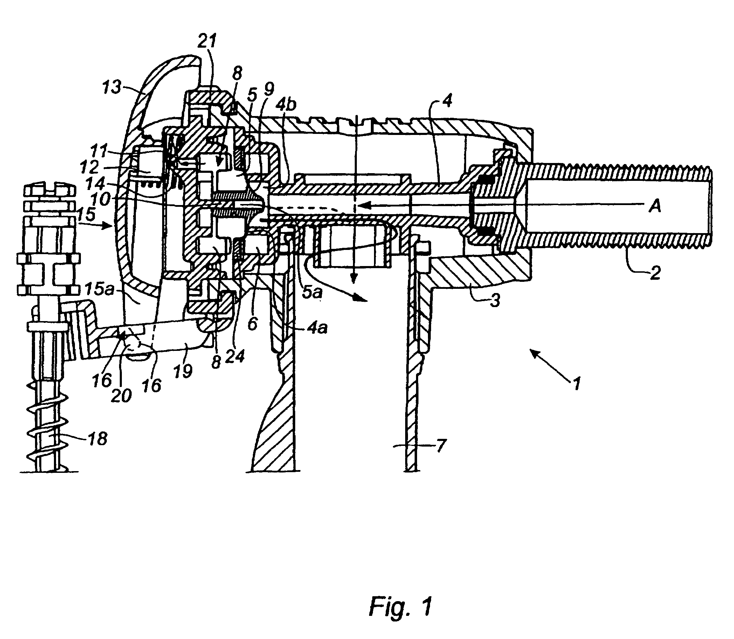

La figure 1 représente une vue en coupe longitudinale agrandie d'un robinet à flotteur selon un premier mode de réalisation de l'invention ;

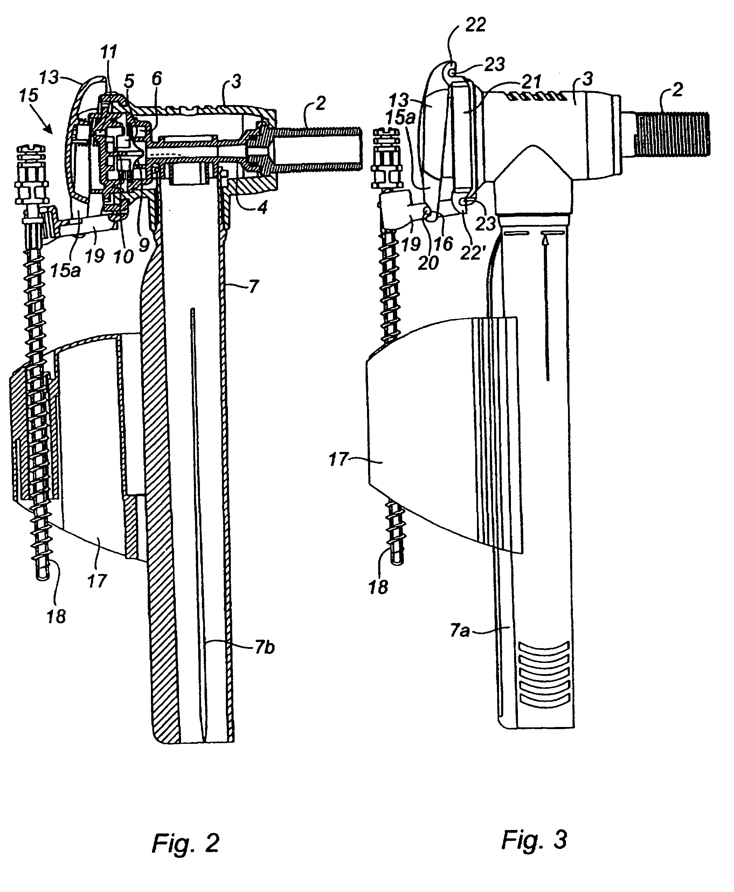

La figure 2 représente une vue en coupe longitudinale du robinet de la figure 1;
La figure 3 représente une vue en perspective latérale du robinet selon la figure 2 ;
La figure 4 représente une vue en perspective éclatée du robinet selon la figure 2 ;
La figure 5 représente une vue en perspective latérale d'un robinet à flotteur selon un second mode de réalisation de l'invention ; et
La figure 6 représente une vue en coupe longitudinale du robinet selon la figure 5.

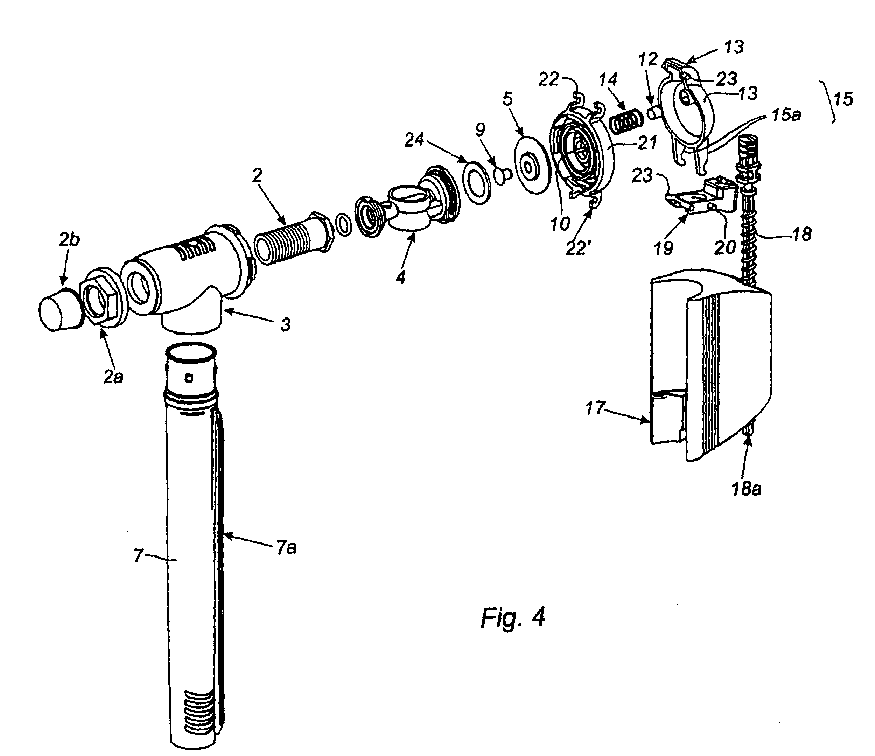

Le robinet à flotteur 1 selon l'invention comporte un embout de fixation 2 se raccordant à l'alimentation en eau et au moyen duquel il est fixé le long d'une paroi d'un réservoir de chasse d'eau présentant de préférence un orifice pour le logement dudit embout 2 maintenu à l'aide d'un écrou 2a protégé par un capuchon de protection 2b (voir figure 4).

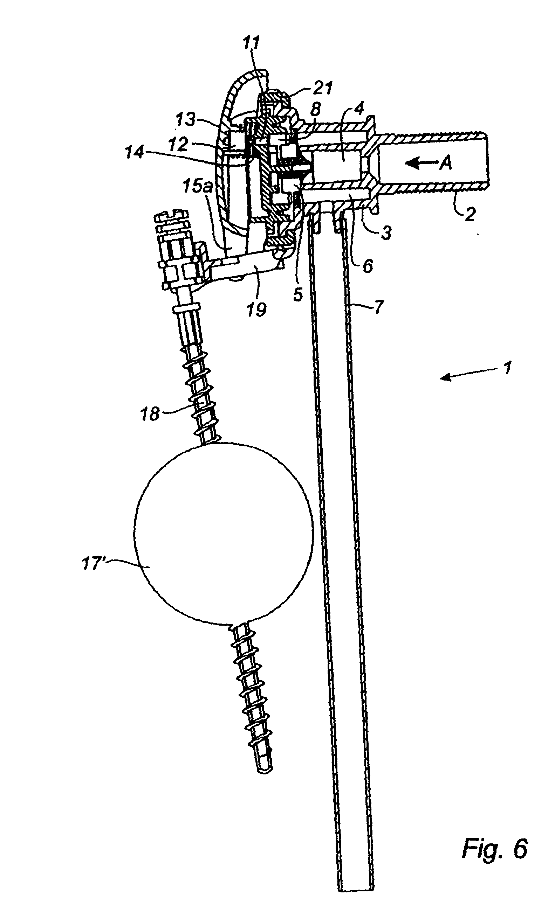

Le robinet 1 comporte un corps 3 de préférence ouvert à ses deux extrémités auquel l'embout 2 peut être raccordé par vissage ou bien encore cet embout 2 peut être réalisé d'une seule pièce avec le corps 3 (voir la figure 6). L'embout de fixation 2 peut être fabriqué en matière plastique, en laiton ou tout autre matériau approprié.

Dans le corps 3, est logé un conduit d'alimentation 4 prolongé, à une extrémité, par ledit embout de fixation 2 et dont l'extrémité opposée porte le siège 4a d'une membrane souple élastique 5 qui, lors d'un écoulement d'eau depuis l'alimentation en eau au travers de l'embout de fixation 2 et du conduit d'alimentation 4, se déforme pour mettre en communication le conduit d'alimentation 4 avec un tube plongeur 7 débouchant dans le réservoir de chasse d'eau. Cette communication s'établit d'abord avec une chambre annulaire 6 concentrique audit conduit d'alimentation 4 et qui débouche ensuite dans le tube plongeur 7.

La membrane 5 en appui sur son siège 4a délimite une chambre de pression 4b en amont de ladite membrane 5.

En aval de la membrane 5, une chambre de contre-pression 8 est définie entre ladite membrane 5 et un bouchon de fermeture 21 du corps 3. La surface active sur la membrane 5 de la chambre de pression 4b est inférieure à la surface active sur la membrane dans la chambre de contre-pression 8.

La membrane 5 présente une perforation centrale 5a à l'intérieur de laquelle est logé un calibreur 9 dans lequel coulisse une aiguille 10 avec un jeu calibré de manière à autoriser l'écoulement de l'eau dans la chambre de contre-pression 8 depuis le conduit d'alimentation 4 de manière à obtenir un équilibre entre chambre de pression 4b et chambre de contre-pression 8. Le coulissement de l'aiguille 10 dans le calibreur 9 au cours des déformations de la membrane 5 assure un autonettoyage évitant les risques de bouchage.

L'aiguille 10 est ménagée en saillie du bouchon de fermeture 21 et peut être réalisée monobloc avec ledit bouchon de fermeture 21.

De plus, le calibreur 9 présente une forme en tulipe qui favorise la réduction des bruits engendrés par les vibrations au cours du passage de l'eau.

De préférence, la membrane 5 est montée de manière à être ouverte au repos, c'est-à-dire légèrement écartée du siège 4a, de telle sorte qu'un tel robinet à flotteur fonctionne à de faibles pressions dynamiques telles que 0,1 bar tout en étant capable de résister à de hautes pressions dynamiques telles que 16 bars.

Une rondelle 24 de renfort est mise en place contre la membrane 5, entre celle-ci et le conduit d'alimentation 4 de manière à éviter la déformation de la membrane 5 lors de fortes pressions.

Dans la chambre de contre-pression 8 débouche un orifice d'échappement 11 ménagé dans le bouchon de fermeture 21, ledit orifice 11 pouvant être fermé par un clapet 12 logé dans un capot de fermeture 13 faisant partie intégrante d'un levier 15 monté pivotant à l'extrémité supérieure du bouchon de fermeture 21 ou du corps 3 et s'étendant sensiblement le long de ce dernier. Un moyen de rappel élastique 14 tel qu'un ressort est logé entre le capot de fermeture 13 et l'orifice d'échappement 11, autour du clapet 12 et maintient ledit clapet de fermeture 12 écarté de l'orifice d'échappement 11.

Quand le clapet 12 obture l'orifice d'échappement 11 de la chambre de contre-pression 8, la membrane 5 est plaquée contre le siège 4a et présente une surface active en amont plus petite que la surface active en aval alors que, lorsque le clapet 12 est ouvert, il existe une perte de charge du côté de l'échappement, le passage dudit orifice d'échappement 11 étant plus important que le passage entre le calibreur 9 et l'aiguille 10. De préférence, ce passage est deux fois plus important.

Ainsi, l'eau s'écoule dans le conduit d'alimentation 4 selon la flèche A jusqu'à la membrane 5 où elle est alors laminée entre ladite membrane 5 et le siège 4a de celle-ci. L'eau passe également dans la chambre de contre-pression 8 grâce au jeu calibré entre l'aiguille 10 et le calibreur 9 dans la perforation centrale de la membrane 5. La pression étant plus forte du côté amont du fait de l'orifice d'échappement 11 ouvert, la membrane 4 est alors écartée de son siège 4a, l'eau passe dans la chambre annulaire 6 puis dans le tube plongeur 7 qui débouche dans le réservoir.

Le flotteur 17 est engagé sur un rail de guidage 7a, de préférence en T, ménagé sur le tube plongeur 7 et est monté réglable en hauteur le long d'une vis de réglage 18. La hauteur du flotteur 17 est réglée le long de la vis 18 à l'aide d'une vis micrométrique 18a par exemple.

La vis 18 est portée par le levier 19 libre en pivotement par rapport audit levier 19 de telle sorte que, lors de la montée du niveau d'eau, le flotteur 17 monte en translation le long du rail de guidage 7a et la vis 18 monte également entraînant en pivotement le levier 19.

Le second levier 15 est donc constitué par le capot de fermeture 13 monté pivotant à une extrémité sur le bouchon de fermeture 21 ou le corps 3, et qui présente, à son extrémité opposée, deux bras 15a pourvus respectivement à leur extrémité d'un profil de came 16. Le levier 19 présente deux tétons 20 coopérant respectivement avec le profil de came 16 ménagé sur l'extrémité desdits bras 15a.

De préférence, le bouchon de fermeture 21 ferme l'extrémité du corps 3 et comporte des moyens de fixation à pivotement tels que des pattes courbes 22, dans sa partie supérieure et tels que des pattes courbes 22', dans sa partie inférieure, pour le levier 15 et le levier 19, le levier 15 et le levier 19 présentant des ergots 23 coopérant avec les pattes 22, 22'.

Ainsi, lorsque l'eau atteint le flotteur 17, celui-ci est entraîné verticalement vers le haut avec l'eau, ce mouvement en translation verticale est changé en pivotement du levier 19 de telle sorte que chaque téton 20 du levier 19 glisse contre le profil de came 16 du levier 15 pour fermer sur une course rapide le clapet de fermeture 12.

L'orifice d'échappement 11 étant fermé, la pression dans la chambre de contre-pression 8 remonte et repousse la membrane élastique 5 contre son siège 4a fermant ainsi le robinet à flotteur 1.

De préférence, la sortie d'eau depuis la chambre annulaire 6 est tangentielle dans le tube plongeur 7 qui présente une rampe hélicoïdale entre un tube intérieur et un tube extérieur. Cette rampe hélicoïdale permet au jet d'eau de ne pas se couper lui-même et donc de réduire le bruit.

De préférence, le tube plongeur 7 comporte sur sa face intérieure au moins une nervure longitudinale 7b permettant de réduire les turbulences engendrant des vibrations dues aux interférences entre les courants d'eau ascendants et descendants.

Cet agencement combiné avec les rampes hélicoïdales décrites précédemment permet une réduction sensible du niveau acoustique perceptible lors du remplissage rendant ce dernier plus silencieux. Ce modèle offre en outre une très grande compacité et donc un encombrement plus réduit.

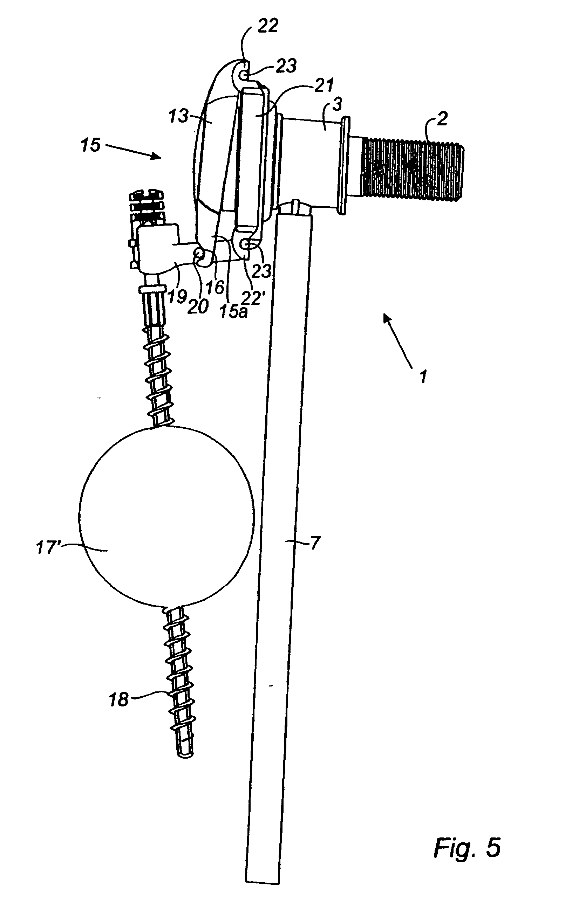

Aux figures 5 et 6, est représentée une variante de réalisation dans laquelle le flotteur 17', sous forme d'une boule, est engagé par vissage sur une vis de réglage 18, s'étendant sensiblement parallèlement au tube plongeur 7, le positionnement dudit flotteur 17' pouvant être réglé par simple vissage/dévissage de ladite boule 17' le long de la vis 18.

Cette vis de réglage 18 est portée de manière fixe par une extrémité du premier levier 19, monté pivotant à son extrémité opposée, sur le bouchon de fermeture 21 et s'étendant sensiblement perpendiculairement à la vis 18. Ainsi, lorsque l'eau atteint le flotteur 17', celui-ci est entraîné verticalement avec l'eau, ce mouvement en translation verticale est changé en pivotement de la vis 18 entraînant en pivotement le levier 19 de telle sorte que chaque téton 20 glisse contre le profil de came 16 des bras 15a du levier 15 pour fermer sur une course rapide le clapet de fermeture 12.

Cette variante de l'invention présente l'avantage d'être économiquement intéressante.

## Revendications

1. Robinet à flotteur (1) pour réservoir de chasse d'eau, du type comportant un corps (3) dans lequel est logé un conduit d'alimentation (4) prolongé à une extrémité par un embout de fixation (2) se raccordant à l'alimentation en eau et dont l'extrémité opposée porte un siège (4a) en contact avec une membrane souple (5) élastiquement déformable obturant la communication entre le conduit d'alimentation (4) et un tube plongeur (7) débouchant dans le réservoir, et en amont de laquelle est définie une chambre de pression (4b) tandis qu'en aval est définie une chambre de contre-pression (8) pourvue d'un orifice d'échappement (11) obturé par un clapet de fermeture (12) actionné par un flotteur (17, 17') plongeant dans le réservoir, les deux chambres (4b, 8) communiquant au travers d'une perforation centrale (5a) de la membrane (5) avec un jeu calibré,
**caractérisé en ce que** le flotteur (17, 17') est associé à des moyens de commande du clapet (12) comportant au moins un premier levier (19) monté pivotant, à une extrémité, sur le corps (3) du robinet ou sur un bouchon de fermeture (21) dudit corps (3) et portant à son autre extrémité une vis de réglage (18) reliée au flotteur (17), au moins un second levier (13, 15) agissant sur le clapet de fermeture (12) étant monté pivotant à une extrémité sur le corps (3) du robinet ou le bouchon de fermeture (21), un moyen de rappel élastique (14) maintenant ledit clapet de fermeture (12) écarté de l'orifice d'échappement (11), le second levier (15), à son extrémité opposée, étant muni d'un profil de came (16) avec lequel coopère, au cours de la montée du flotteur (17, 17'), un organe en saillie tel qu'un téton (20) ménagé sur le premier levier (19), de manière à surmonter la force de rappel du moyen de rappel élastique (14).

2. Robinet selon la revendication 1,
**caractérisé en ce que** la chambre de contre-pression (8) est définie entre la membrane (5) et le bouchon de fermeture (21) du corps (3) du robinet (1) monté à l'une des extrémités ouvertes dudit corps (3).

3. Robinet selon l'une des revendications 1 et 2,
**caractérisé en ce que** le second levier (15) est constitué d'un capot de fermeture (13) monté pivotant sur ledit bouchon (21) ou le corps (3) à une extrémité et présentant, à son extrémité opposée, deux bras (15a) en saillie dudit capot (13) et coopérant avec le premier levier (19).

4. Robinet selon l'une des revendications 1 à 3,
**caractérisé en ce que** le bouchon de fermeture (21) ferme l'extrémité du corps (3) et comporte des moyens de fixation à pivotement tels que des pattes courbes (22), dans sa partie supérieure et tels que des pattes courbes (22'), dans sa partie inférieure, pour le second levier (15) et le premier levier (19), le capot (13) et le premier levier (19) présentant des ergots (23) coopérant avec les pattes (22, 22').

5. Robinet selon l'une des revendications 1 à 4,
**caractérisé en ce que**, dans la perforation centrale (5a) de la membrane (5), est logé un calibreur (9) dans lequel coulisse une aiguille (10) avec un jeu calibré.

6. Robinet selon la revendication 5,
**caractérisé en ce que** l'aiguille (10) est ménagée en saillie du bouchon de fermeture (21) et est réalisée monobloc avec ledit bouchon de fermeture (21).

7. Robinet selon l'une des revendications 5 et 6,
**caractérisé en ce que** le calibreur (9) présente une forme en tulipe.

8. Robinet selon l'une des revendications 1 à 7,
**caractérisé en ce que** la membrane (5) est montée de manière à être ouverte au repos.

9. Robinet selon l'une des revendications 1 à 8,
**caractérisé en ce qu'**une rondelle (24) de renfort est mise en place contre la membrane (5), entre celle-ci et le conduit d'alimentation (4) de manière à éviter la déformation de la membrane (5) lors de fortes pressions.

10. Robinet selon l'une des revendications 1 à 9,
**caractérisé en ce que** le flotteur (17) est engagé sur un rail de guidage (7a), de préférence en T, ménagé sur le tube plongeur (7), la vis de réglage (18) étant porté par le premier levier (19) libre en pivotement par rapport audit premier levier (19).

11. Robinet selon la revendication 10,
**caractérisé en ce que** la hauteur du flotteur (17) est réglée le long de la vis (18) à l'aide d'une vis micrométrique (18a).

12. Robinet selon l'une des revendications 1 à 9,
**caractérisé en ce que** le flotteur (17'), sous forme d'une boule, est engagé par vissage sur la vis de réglage (18), s'étendant sensiblement parallèlement au tube plongeur (7), le positionnement dudit flotteur (17') pouvant être réglé par simple vissage-dévissage de ladite boule (17') le long de la vis (18).

13. Robinet selon la revendication 12,
**caractérisé en ce que** la vis de réglage (18) est portée fixe par le premier levier (19).

14. robinet selon l'une des revendications 1 à 13,
**caractérisé en ce que** la sortie d'eau depuis une chambre annulaire (6) est tangentielle dans le tube plongeur (7) qui présente une rampe hélicoïdale entre un tube intérieur et un tube extérieur.

15. Robinet selon l'une des revendications 1 à 14,
**caractérisé en ce que** le tube plongeur (7) comporte, sur sa face intérieure, au moins une nervure longitudinale (7b) permettant de réduire les vibrations.

## Patentansprüche

1. Schwimmerbetätigtes Ventil (1) für einen Behälter einer Wasserspülvorrichtung, mit einem Körper (3), in dem eine Speisungsleitung (4) angeordnet ist, welche an einem Ende durch einen Befestigungsstutzen (2) verlängert ist, welcher an die Wasserversorgung angeschlossen wird, und dessen entgegengesetztes Ende einen Sitz (4a) aufweist, welcher in Kontakt mit einer flexiblen und elastisch verformbaren Membran (5) ist, welche die Verbindung zwischen der Speisungsleitung (4) und einem in den Behälter mündenden Tauchrohr (7) verschließt und vor welcher eine Druckkammer (4b) begrenzt ist, während danach eine Gegendruckkammer (8) begrenzt ist, welche mit einer Auslassöffnung (11) versehen ist, welche mit einer Verschlussklappe (12) verschlossen ist, welche durch einen in den Behälter tauchenden Schwimmer (17, 17') betätigt wird, wobei die zwei Kammern (4b, 8) durch ein zentrales Loch (5a) in der Membran (5) mit kalibriertem Spiel miteinander verbunden sind,
**dadurch gekennzeichnet, dass** der Schwimmer (17, 17') Mitteln zur Steuerung der Klappe (12) zugeordnet ist, die mindestens einen ersten Hebel (19), welcher an einem Ende an dem Körper (3) des Ventils oder an einem Verschlussstopfen (21) des genannten Körpers (3) schwenkbar gelagert ist und an seinem anderen Ende eine mit dem Schwimmer (17) verbundene Stellschraube (18) trägt, und mindestens einen zweiten Hebel (13, 15) umfassen, welcher auf die Verschlussklappe (12) wirkt und an einem Ende an dem Körper (3) des Ventils oder an dem Verschlussstopfen (21) schwenkbar gelagert ist, wobei ein elastisches Rückstellmittel (14) vorgesehen ist, welches die genannte Verschlussklappe (12) von der Auslassöffnung (11) beabstandet hält, wobei der zweite Hebel (15) an seinem entgegengesetzten Ende mit einer Nockenform (16) versehen ist, mit welcher ein vorspringendes Organ, beispielsweise ein an dem ersten Hebel (19) ausgebildeter Zapfen (20) derart zusammenwirkt,dass, während der Schwimmer (17, 17') steigt, die Rückstellkraft des elastischen Rückstellmittels (14) überwunden werden kann.

2. Ventil nach Anspruch 1,
**dadurch gekennzeichnet, dass** die Gegendruckkammer (8) zwischen der Membran (5) und dem Verschlussstopfen (21) des Körpers (3) des Ventils (1) begrenzt ist, welcher an einem der offenen Enden des besagten Körpers (3) montiert ist.

3. Ventil nach einem der Ansprüche 1 und 2,
**dadurch gekennzeichnet, dass** der zweite Hebel (15) durch eine Verschlusskappe (13) gebildet ist, welche an einem Ende an dem genanntenn Verschlussstopfen (21) oder an dem Körper (3) schwenkbar gelagert ist und an dem entgegengesetzten Ende zwei in Bezug auf die genannte Kappe (13) vorspringende und mit dem ersten Hebel (19) zusammenwirkende Arme (15a) aufweist.

4. Ventil nach einem der Ansprüche 1 bis 3,
**dadurch gekennzeichnet, dass** der Verschlussstopfen (21) das Ende des Körpers (3) verschließt und schwenkbare Befestigungsmittel, beispielsweise gebogene Laschen (22), in seinem oberen Teil und beispielsweise gebogene Laschen (22') in seinem unteren Teil für den zweiten Hebel (15) und den ersten Hebel (19) aufweist, wobei die Kappe (13) und der erste Hebel (19) Vorsprünge (23) aufweisen, welche mit den Laschen (22, 22') zusammenwirken.

5. Ventil nach einem der Ansprüche 1 bis 4,
**dadurch gekennzeichnet, dass** in das zentrale Loch (5a) der Membran (5) ein Kalibrierer (9) eingesetzt ist, in welchem eine Nadel (10) mit kalibriertem Spiel verschieblich ist.

6. Ventil nach Anspruch 5,
**dadurch gekennzeichnet, dass** die Nadel (10) vorspringend in Bezug auf den Verschlussstopfen (21) angeordnet ist und einstückig mit dem genannten Verschlussstopfen ausgebildet ist.

7. Ventil nach einem der Ansprüche 5 und 6, **dadurch gekennzeichnet, dass** der Kalibrierer (9) tulpenförmig ausgebildet ist.

8. Ventil nach einem der Ansprüche 1 bis 7,
**dadurch gekennzeichnet, dass** die Membran (5) derart montiert ist, dass sie im Ruhezustand offen ist.

9. Ventil nach einem der Ansprüche 1 bis 8,
**dadurch gekennzeichnet, dass** eine Verstärkungsscheibe (24) gegen die Membran (5) zwischen dieser und der Speisungsleitung (4) derart eingesetzt ist, dass die Verformung der Membran (5) bei starken Drücken verhindert wird.

10. Ventil nach einem der Ansprüche 1 bis 9,
**dadurch gekennzeichnet, dass** der Schwimmer (17) auf eine vorzugsweise T-förmige Führungsschiene (7a) greift, welche auf dem Tauchrohr (7) angeordnet ist, wobei die Stellschraube (18) von dem ersten Hebel (19) derart getragen ist, dass sie in Bezug auf den genannten ersten Hebel (19) frei schwenkbar ist.

11. Ventil nach Anspruch 10,
**dadurch gekennzeichnet, dass** die Höhe des Schwimmers (17) entlang der Schraube (18) mit Hilfe einer Mikrometerschraube (18a) eingestellbar ist.

12. Ventil nach einem der Ansprüche 1 bis 9,
**dadurch gekennzeichnet, dass** der kugelförmig ausgebildete Schwimmer (17') durch Verschraubung auf die Stellschraube (18) greift, welche weitestgehend parallel zum Tauchrohr (7) verläuft, wobei die Positionierung des genannten Schwimmers (17') durch einfaches Aufschrauben/Abschrauben der genannten Kugel (17') entlang der Schraube (18) eingestellt werden kann.

13. Ventil nach Anspruch 12, **dadurch gekennzeichnet,**
**dass** die Stellschraube (18) fest von dem ersten Hebel (19) getragen wird.

14. Ventil nach einem der Ansprüche 1 bis 13,
**dadurch gekennzeichnet, dass** der Wasseraustritt von einer Ringkammer (6) aus tangential im Tauchrohr (7) erfolgt, welches eine spiralförmige Rampe zwischen einem Innenrohr und einem Außenrohr aufweist.

15. Ventil nach einem der Ansprüche 1 bis 14,
**dadurch gekennzeichnet, dass** das Tauchrohr (7) auf seiner Innenseite mindestens eine Längsrippe (7b) aufweist, mit welcher die Schwingungen verringert werden können.

## Claims

1. Ballcock (1) for a flush cistern, of the type comprising a body (3) in which a feed pipe (4) is accommodated that is extended at one end by a fixing piece (2) connecting to the water supply and the opposite end of which has a seat (4a) in contact with an elastically deformable flexible membrane (5) closing off the communication between the feed pipe (4) and a plunge pipe (7) opening into the reservoir, and upstream of which a pressure chamber (4b) is defined, whilst downstream a back pressure chamber (8) is defined provided with an escape opening (11) closed off by a shut-off valve (12) actuated by a float (17, 17') plunging into the reservoir, the two chambers (4b, 8) communicating via a central hole (5a) in the membrane (5) with calibrated clearance,
**characterised in that** the float (17, 17') is associated with control means for the valve (12) comprising at least a first lever (19) pivotably mounted, at one end, on the body (3) of the cock or on a closing cap (21) for the said body (3) and having at its other end an adjusting screw (18), connected to the float (17), at least a second lever (13, 15) acting on the shut-off valve (12) being pivotably mounted at one end on the body (3) of the cock or the closing cap (21), elastic return movement means (14) holding the said shut-off valve (12) away from the escape opening (11), the second lever (15) being equipped, at its opposite end, with a cam profile (16) with which, during the rise of the float (17, 17'), a projecting member, such as a dog point (20) made on the first lever (19), interacts so as to overcome the return movement force of the elastic return movement means (14).

2. Cock according to Claim 1,
**characterised in that** the back pressure chamber (8) is defined between the membrane (5) and the closing cap (21) of the body (3) of the cock (1) fitted at one of the open ends of the said body (3).

3. Cock according to one of Claims 1 and 2,
**characterised in that** the second lever (15) consists of a shut-off valve (13) pivotably mounted on the said cap (21) or the body (3) at one end and having, at its opposite end, two arms (15a) projecting from the said valve (13) and interacting with the first lever (19).

4. Cock according to one of Claims 1 to 3,
**characterised in that** the closing cap (21) closes the end of the body (3) and has means for pivoting fixing, such as curved tabs (22) in its upper part and such as curved tabs (22') in its lower part, for the second lever (15) and the first lever (19), the valve (13) and the first lever (19) having nibs (23) interacting with the tabs (22, 22').

5. Cock according to one of Claims 1 to 4,
**characterised in that** a calibrator (9), in which a needle (10) slides with calibrated clearance, is accommodated in the central hole (5a) of the membrane (5).

6. Cock according to Claim 5,
**characterised in that** the needle (10) is arranged such that it protrudes from the closing cap (21) and is made in one piece with the said closing cap (21).

7. Cock according to one of Claims 5 and 6,
**characterised in that** the calibrator (9) is bell-shaped.

8. Cock according to one of Claims 1 to 7,
**characterised in that** the membrane (5) is fitted so as to be open at rest.

9. Cock according to one of Claims 1 to 8,
**characterised in that** a reinforcing washer is positioned against the membrane (5), between the latter and the feed pipe (4) so as to prevent deformation of the membrane (5) during high pressures.

10. Cock according to one of Claims 1 to 9,
**characterised in that** the float (17) is in engagement on a guide rail (7a), preferably T shaped, provided on the plunge pipe (7), the adjusting screw (18) being supported by the first lever (19) in a freely pivoting manner with respect to the said first lever (19).

11. Cock according to Claim 10,
**characterised in that** the height of the float (17) is adjusted along the screw (18) with the aid of a micrometer screw (18a).

12. Cock according to one of Claims 1 to 9,
**characterised in that** the float (17'), in the form of a ball, is in screwed engagement on the adjusting screw (18), extending essentially parallel to the plunge pipe (7), it being possible for the positioning of the said float (17') to be adjusted by simple screwing/unscrewing of the said ball (17') along the screw (18).

13. Cock according to Claim 12,
**characterised in that** the adjusting screw (18) is supported in a fixed position by the first lever (19).

14. Cock according to one of Claims 1 to 13,
**characterised in that** the discharge of water from an annular chamber (6) is tangential into the plunge pipe (7) which has a helical ramp between an inner tube and an outer tube.

15. Cock according to one of Claims 1 to 14,
**characterised in that** the plunge pipe (7) has, on its inner surface, at least one longitudinal rib (7b) enabling vibrations to be reduced.
